# EUROPÄISCHE PATENTSCHRIFT

(11) **EP 1 077 862 B1**
(45) Veröffentlichungstag und Bekanntmachung des Hinweises auf die Patenterteilung: **19.03.2003**
(21) Anmeldenummer: 99917734.8
(22) Anmeldetag: 17.05.1999
(51) Int. Cl.: B62D 1/19

(54) **CRASHSYSTEM FÜR LENKSÄULE**
STEERING COLUMN CRASH SYSTEM
SYSTEME DE SECURITE EN CAS DE COLLISION POUR COLONNE DE DIRECTION

(30) Priorität: 22.05.1998 CH 112998
(43) Veröffentlichungstag der Anmeldung: 28.02.2001
(73) Patentinhaber: ThyssenKrupp Presta AG, 9492 Eschen (LI)
(72) Erfinder: MARXER, Kurt, FL-9485 Nendeln (LI); MARXER, Markus, FL-9487 Gamprin (LI); MEIER, Ronald, FL-9493 Mauren (LI)
(74) Vertreter: Wegmann, Urs
(86) Internationale Anmeldenummer: CH9900209
(87) Internationale Veröffentlichungsnummer: WO99061298

(56) Entgegenhaltungen:
- DE-A- 19 637 176
- US-A- 4 943 028
- US-A- 5 390 955

## Beschreibung

Die Erfindung betrifft eine Lenkvorrichtung für Kraftfahrzeuge mit einer Lenkwelle nach dem Oberbegriff des Patentanspruches 1.

Lenkvorrichtungen für Kraftfahrzeuge sind oft zweiteilig ineinander verschieblich ausgeführt, so dass im Falle einer Frontalkollision die Lenkvorrichtung den Fahrer nicht gefährdet, indem die Lenkvorrichtung beim Aufprall des Körpers auf das Lenkrad nachgibt und die Aufprallenergie absorbiert wird. Bei den bekannten Vorrichtungen ist üblicherweise das verschiebliche Lenkwellenrohr, welches die steuerradseitige Lenkwelle aufnimmt, in einem Gehäuse angeordnet, welches gegenüber dem Fahrzeugchassis durch Verschrauben in vorgegebener Position festgeklemmt ist. Die Verschraubung ist hierbei so ausgeführt, dass beim Aufprall das lenkradseitige Wellenende mit der verschraubten Gehäusekonsole in Achsrichtung, in verklemmtem Zustand, um einen bestimmten Weg verschiebbar ist. Die Aufprallenergie wird durch die Verklemmung entsprechend absorbiert. Um die Energieabsorption im Aufprallfall gleichförmiger zu gestalten, wurden zusätzlich Energieabsorptionselemente zwischen dem längsverschieblichen Wellenteil und dem Chassis des Fahrzeuges angeordnet. Ein Energieabsorptionselement, welches als aufreissbare Blechzunge ausgebildet ist, wurde beispielsweise aus der GB -A-1,390,889, sowie aus der DE-A-1 96 37 176 bekannt.

Ein weiteres Energieabsorptionselement nach dem Oberbegriff des Anspruchs 1 ist in der US-A-4,943,028 offenbart. Die Energieabsorption erfolgt hier dadurch, dass zwischen einer Lenkkonsole und einem Lenkschutzrohr ein Deformationselement, bestehend aus einer energieabsorbierenden Platte angeordnet ist. Die Befestigung erfolgt über einen Bolzen der die Platte durchdringt und im Aufprallfall bei der Längsverschiebung diese Platte deformiert wodurch Energie absorbiert wird.

In der US-A-5,390,955 wird ebenfalls eine Lenksäulenbefestigung offenbart welche bei einem Aufprall nachgibt und sich verschiebt. Dämpfungskapseln aus Kunststoff an der Montageklemme sind bei dieser Ausführung keilförmig ausgebildet, derart dass die friktions Haltekraft sich sofort löst wenn die Lenksäule beginnt zu kollabieren.

Ein Nachteil der bekannten Crashsysteme für Lenksäulen besteht darin, dass einerseits die Losbrechkraft nicht in weiten Bereichen von der Energieabsorptionskraft im wesentlichen unabhängig definiert werden konnte. Das Absorptionsverhalten konnte auch nicht genau reproduzierbar vorgegeben werden.

Es ist Aufgabe der vorliegenden Erfindung ein Crashsystem für eine Lenksäulenanordnung vorzuschlagen, wodurch die Nachteile des Standes der Technik behoben werden. Insbesondere besteht die Aufgabe darin, ein Crashsystem für Lenksäulen zu realisieren, welches eine definierte Losbrechkraft und eine definierte Energieabsorption unter reproduzierbarem Verhalten ermöglicht. Ausserdem soll die Anordnung einfach montierbar und wirtschaftlich herstellbar sein.

Die Aufgabe wird erfindungsgemäss durch die Anordnung nach dem kennzeichnenden Teil des Anspruchs 1 gelöst. Die abhängigen Ansprüche definieren weitere vorteilhafte Ausführungsformen.

Erfindungsgemäss wird die Anordnung so ausgeführt, dass die Losbrechkraft von der Energieabsorptionskraft im Crashfall beim Verschieben der Lenkwelle im Aufprallsfall entkoppelt wird.

Die Verklemmung soll also im Crashfall sofort gelöst werden, wozu ein sogenanntes Losbrechelement dient, um die Aufprallenergie nach dem Losbrechen der Verklemmung im Wesentlichen auf ein Energieabsorptionselement abzugeben. Damit wird erreicht, dass die Energieabsorption über den definierten Verschiebeweg im Wesentlichen nicht mehr durch undefinierte Klemmkräfte beeinflusst wird und die Absorptionswirkung gezielt durch die Ausführung des Absorptionselementes vorgebbar ist.

Für eine Ausführungsform des Losbrechelements werden dazu im Bereich der Klemmbefestigung, wo die grossen Klemmkräfte zwischen Gehäusekonsole und dem stationären Chassisteil auftreten, die durch die Verklemmung aneinander gepressten Flächenteile gegenüber der Gleitrichtung leicht geneigt, d. h. unter einem bestimmten Keilwinkel so angeordnet, dass bereits bei einem kurzen Verschiebeweg die ursprüngliche Verklemmung sofort vermindert wird, indem die beiden Keilflächenteile abhängig von der Winkelneigung auseinanderfahren. Auf diese Weise wird bei einem Aufprall schon nach einer Verschiebung von einigen Zehnteln mm die Verklemmung losgebrochen und die weitere Verschiebung wird nicht mehr durch undefinierte Klemmkräfte bestimmt. Die Gehäusekonsole welche das Lenkwellenrohr fixiert und somit als Haltekonsole ausgebildet ist, ist über einen Aufreissstreifen mit dem Chassis verbunden. Die Ausführung dieses Aufreissstreifens bestimmt nun im wesentlichen den Grad und den Verlauf des Energieabsorptionsverhaltens. Durch entsprechende Dimensionierung dieses Aufreissstreifens kann das Energieabsorptionsverhalten entsprechend optimal schonend für den Fahrer ausgelegt werden.

Eine weitere bevorzugte Ausführung besteht darin, dass im Bereich der zusammengepressten Gleitflächen beidseitig der Flächen Erhöhungen angeordnet sind, welche sich gegenseitig über eine kurze Wegstrecke abstützen, womit die Gleitfläche im Wesentlichen in den kurzen Berührungszonen der Erhebungen ausgebildet ist und im Verschiebefall, das heisst im Losbrechfall, gleitet die eine Erhebung bereits nach einer kurzen Wegstrecke, beispielsweise von einigen Millimetern, von der anderen Erhebung herunter und erzeugt somit im Crashfall das gewünschte Losbrechen. Eine weitere besonders einfache, bevorzugte Ausführungsform eines Losbrechelementes besteht darin, dass mindestens in einem Teilbereich der geklemmten Flächenteile diese gegenüberliegenden Klemmflächen so abgetreppt ausgeführt sind, dass nach einem kurzen Verschiebeweg die Klemmkraft aufgehoben wird.

Eine besonders kostengünstige und platzsparende Lenksäulenanordnung mit Crashsystem für die Energieabsorption ergibt sich dadurch, dass die Lenkwelle in einem Führungskasten gelagert ist, welcher wiederum mit einer Haltekonsole fest verbunden ist, wobei die Haltekonsole seitlich flanschartige Gleitflächen aufweist, welche beispielsweise durch Verschrauben am Fahrzeugchassis festgeklemmt ist. Die Verklemmung ist derart ausgeführt, dass im Crashfall die Lenkwelle mit der Konsole nachgebend, beispielsweise um mehrere Zentimeter, verschoben werden kann. Das Energieabsorptionselement ist einerseits ortsfest mit dem Chassis verbunden und andererseits, wo die Energieabsorption statt findet, über die Konsole mit der Lenkwelle verbunden. Das Absorptionselement wird vorzugsweise als Blechteil mit Aufreissstreifen ausgeführt, welches beispielsweise bügelförmig als Reissbügel ausgebildet zwischen der Flansch förmigen Haltekonsole und dem Chassis montiert ist. Diese Ausführungsform hat den grossen Vorteil, dass die Befestigung der Anordnung am Chassis mit nur zwei Befestigungsmitteln, vorzugsweise zwei Schrauben, möglich ist. Dies vereinfacht die Ausführung ganz wesentlich und erlaubt auch ein rasches Montieren, was sich positiv auf die Gesamtkosten auswirkt. Die Anzugsmomente der Schrauben liegen hierbei mit Vorteil im Bereich von 15 bis 35 Nm. Diese sehr einfache Ausführung der Anordnung und insbesondere die Möglichkeit die ganze Anordnung mit nur zwei Befestigungsschrauben ohne separate Konsolenführung zu befestigen, ermöglicht auch in einfachen Anwendungsfällen den Einsatz ohne die vorerwähnten speziellen Losbrechelemente. In diesem Fall ist aber die definierte Trennung zwischen Losbrechkraft und Energieabsorption weniger eindeutig, dafür ist aber die Anordnung dann besonders kostengünstig realisierbar.

Die Erfindung wird nun nachfolgend anhand von Ausführungsbeispielen mit schematischen Figuren näher erläutert. Es zeigen:
- Fig. 1: eine Seitenansicht der erfindungsgemässen Halteanordnung für Lenksäulen
- Fig. 2a: ein Querschnitt durch die Halteanordnung gemäss Fig. 1
- Fig. 2b: eine Detaildarstellung der Klemmbefestigung im Querschnitt
- Fig. 3a: eine Detaildarstellung einer Klemmflächenanordnung im Längsschnitt mit geneigten Klemmflächen
- Fig. 3b: eine Aufsicht der Klemmanordnung im Detail gemäss Fig. 3a
- Fig. 4: ein Crashkraftmessdiagramm, welches das Verhalten gemäss dem Stand der Technik zeigt
- Fig. 5: ein Crashkraftmessdiagramm, welches das Verhalten gemäss der Erfindung zeigt
- Fig. 6: eine Detaildarstellung einer weiteren Klemmflächenanordnung im Längsschnitt mit Erhebungen als Distanzelemente zwischen den Gleitflächen
- Fig. 7: eine Detaildarstellung einer weiteren Klemmflächenanordnung im Längsschnitt mit Abtreppungen im Klemmbereich

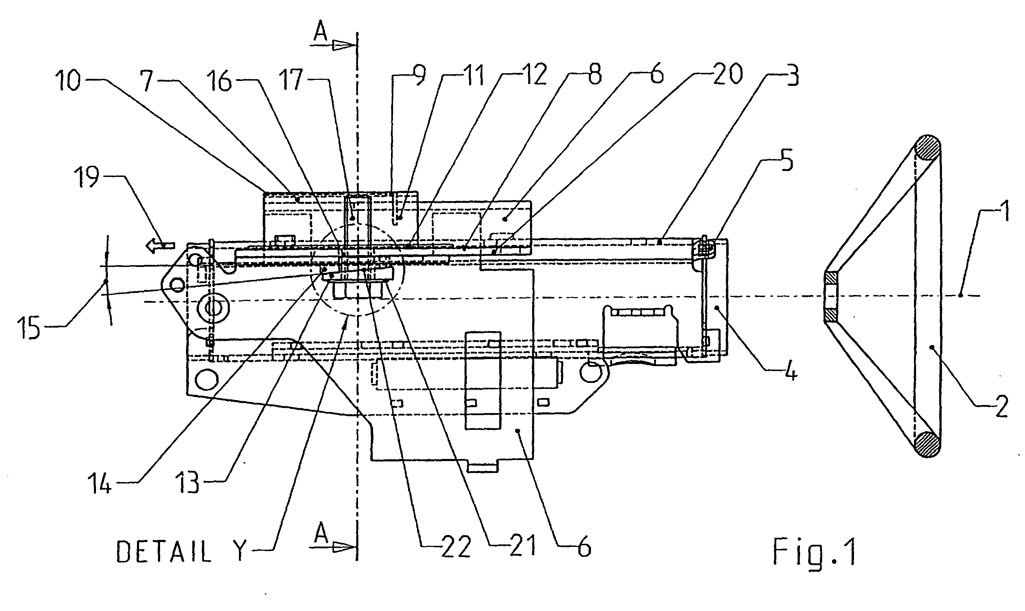

Eine Lenkwelle mit der Lenkwellenachse 1 ist mit einem Lenkrad 2 verbunden und in einem Führungskasten 3 gelagert, welcher, wie dies in Figur 1 dargestellt ist, mit einer Haltekonsole 6 fest, beispielsweise geklemmt, verbunden ist. Der Führungskasten 3 kann zusätzlich höhen- und/oder längsverstellbar angeordnet werden. Die Konsole 6 wiederum ist am Chassis 18 des Fahrzeuges befestigt. Die Welle 1 ist für den Crashfall ineinander verschieblich ausgeführt, womit auch die Konsole 6 für den Crashfall etwa in einem Bereich von bis zu 50 mm, gegenüber dem Chassis 18, längsverschiebbar gelagert werden muss. Die Konsole 6 ist vorzugsweise U-förmig ausgebildet und umschliesst den aufzunehmenden Führungskasten 3 mindestens teilweise. Das Lager-Führungsteil 4 ist beispielsweise durch Halterungen 5 zwischen dem Konsolenteil 6 fixiert. Seitlich der Konsole 6 sind beispielsweise Gleitflächen 8 beidseitig angeordnet, welche einen Längsschlitz 20 aufnehmen. Dieser ist als Laufschlitz ausgebildet und dient zur Aufnahme der Befestigungselemente 13, 16, 17 wie auch Bolzen oder vorzugsweise Klemmschrauben 17.

Die Konsole 6 ist vorzugsweise als Blechteil ausgeführt, welches besonders kostengünstig hergestellt werden kann, wenn dieses ausgestanzt wird und als Biegeteil ausgeführt wird. Neben dem Kostenvorteil hat dies auch den Vorteil, dass eine höhere Biegesteifheit möglich ist als z.B. bei Schweisskonstruktionen.

Durch die Klemmschrauben 17 wird die Konsole 6 an dem Chassis 18 so festgeschraubt, dass im Aufprallfall die Lenkwelle mit dem Führungskasten 3 innerhalb der Laufschlitzlänge verschieblich ist. Um die Verklemmung auch bei geringen Verschiebungswegen sofort loszubrechen, ist im Endbereich des Laufschlitzes 20 in der Ausgangsklemmposition die eine konsolenseitige Klemmfläche 22 unter einem Keilwinkel 15 geneigt als Keilschuh 14 ausgeführt. Die schraubenseitige andere Keilfläche 22 ist als Gleitschuh 13 ebenfalls unter dem Keilwinkel 15 geneigt ausgeführt. Der Gleitschuh 13 ist vorzugsweise so ausgebildet, dass er in der Laufbahn 20 im Verschiebefall gleitet. Da die Klemmflächen gegenüber der Klemmrichtung nun nicht mehr unter 90° stehen ist ein sofortiges Losbrechen der Klemmkraft auch bei kurzen Verschiebewegen möglich. Geeignete Keilwinkel sind von 2° bis 15°, vorzugsweise von 3° bis 8°.

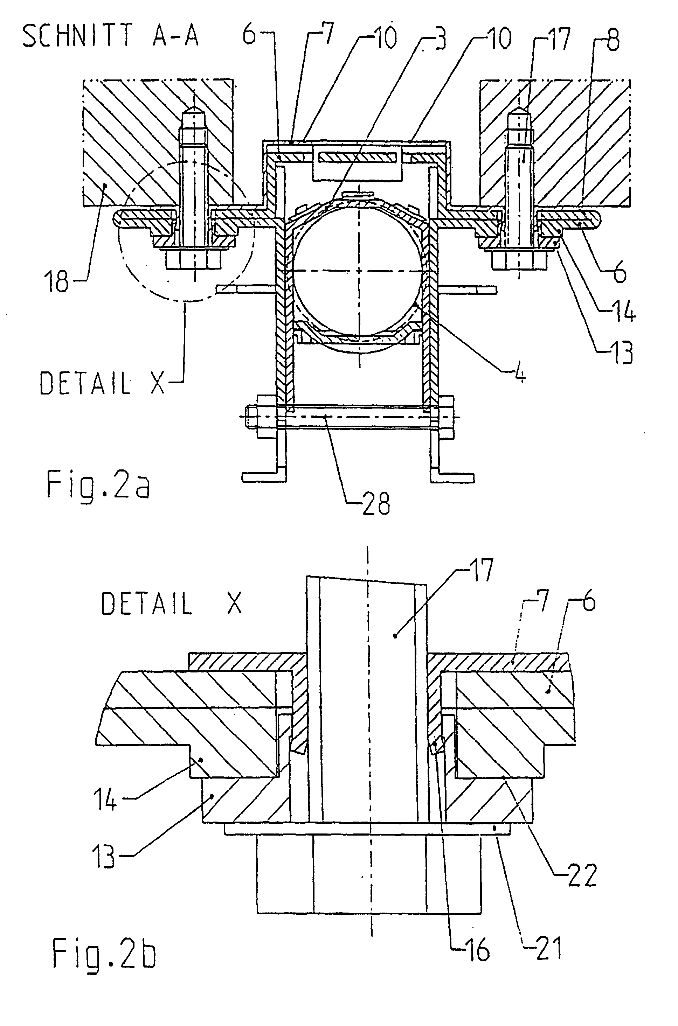

Die Konsole 6 ist beispielsweise direkt mit Schrauben 17 am Chassis 18 festgeschraubt, wobei der Gleitschuh 13 vorzugsweise schraubkopfseitig mit einer Unterlegscheibe 21 angeordnet ist. In Figur 2 ist die Anordnung im Querschnitt dargestellt, woraus die bevorzugte Befestigungsweise beidseitig der Wellenachse 1 am Chassis 18 dargestellt ist. Der Keilschuh 14 kann beispielsweise mit seiner Keilfläche direkt in die Konsole 6 eingearbeitet sein. Dieser lässt sich aber einfacher und präziser herstellen, wenn er als separates, scheibenförmiges Teil hergestellt wird und an der Konsole 6 befestigt wird.

Zur definierten Festlegung des Energieabsorptionsverhaltens wird zusätzlich ein Energieabsorptionselement 7, 9, 10, 11, vorgesehen, welches vorzugsweise als Blechteil mit einem Aufreissstreifen 8 mit Haltelasche ausgebildet ist. Vorteilhafterweise wird das Blechteil als Reissbügel 7 ausgebildet, welches die U-förmige Konsole 6 im oberen Bereich umschliesst und mit der Verklemmung der Konsole 6 am Chassis 18 ortsfest in der Ausgangsposition verbleibend fixiert ist. Der Aufreissstreifen 9 wird mit Vorteil im oberen flachen U-förmig ausgebildeten Blechteil des Reissbügels 7 vorgesehen. Hierbei ist der Aufreissstreifen 9 als Teil des Reissbügels 7 so gegen die Konsole 6 gebogen, dass die dadurch gebildete Haltelesche gegenüber der Konsole fixiert werden kann, beispielsweise geklemmt oder mit einer Schweissverbindung 11. Der Aufreissstreifen 9 mit Haltelasche befindet sich zwischen Kerbbahnen 10 und wird eingestellt durch die Materialdicke des Reissbügelbleches, durch die Materialfestigkeit, sowie durch die Rollbreite mit entsprechendem Rollradius. Eventuell ist es erwünscht, beispielsweise durch Variieren der Rollbreite, das Absorptionskraftprofil über den weg variieren zu können.

Die vorerwähnte konstruktive Ausführung der ganzen Halteanordnung, in dem der Reissbügel 7 mit den Gleitflächen 12 zwischen dem Konsolenflansch 6, 8 und dem Chassis 18 geklemmt wird, weist auch besondere Vorteile auf ohne die Verwendung zusammen mit den speziellen Losbrechelementen 13, 14, 22, 26, 27, 29. Sie ermöglicht eine einfache Montage bei kostengünstiger Ausführung, gutem Betriebsverhalten und hoher Stabilität der Anordnung, insbesondere dann, wenn die Anordnung, wie bevorzugt, nur mit zwei Schrauben 17 am Chassis 18 befestigt wird. Die erfindungsgemässe Anordnung lässt sich ohne eine separate Konsolenführung realisieren, was den Aufbau stark vereinfacht. Besonders einfach wird die Anordnung dann, wenn diese, wie vorerwähnt, nur mit zwei Befestigungsschrauben 17 geklemmt wird und keine separate Konsolenführung vorgesehen wird.

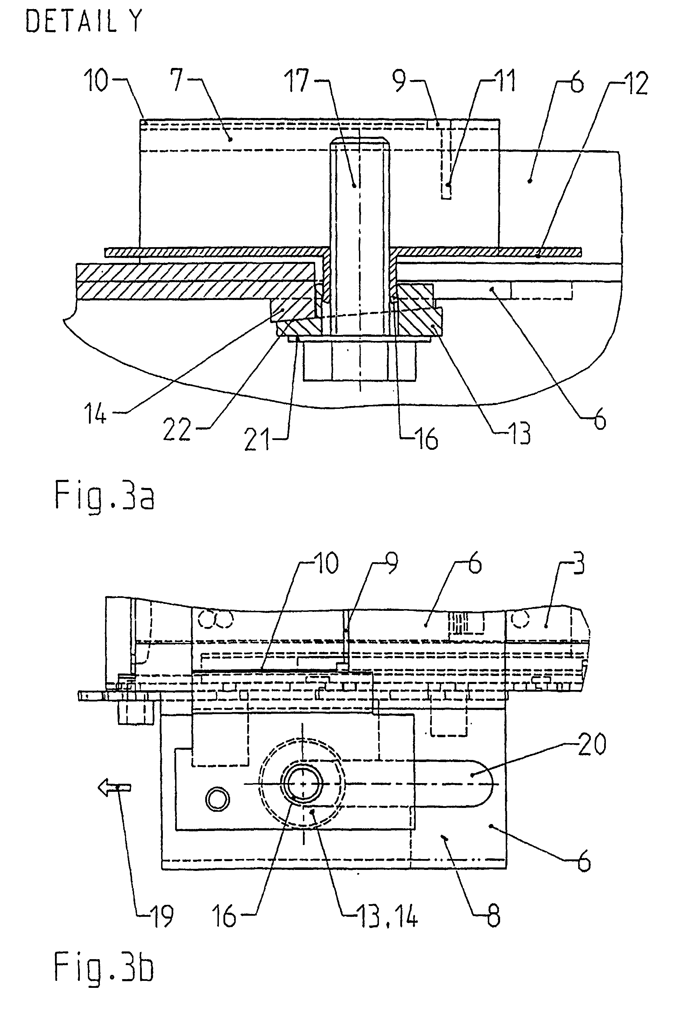

Der Gleitschuh 13 wird, wie in Figur 3a dargestellt, so ausgeführt, dass ein Teil davon im Laufschlitz 20 beim Verschieben der Konsole 6 gegenüber dem Gleitschuh 13 verdrehsicher gleiten kann. Die Keilflächen 22 zwischen dem Keilschuh 14 und dem Gleitschuh 13 bewegen sich hierbei auseinander und die Verklemmung wird losgebrochen, wobei dann die Haltekraft bzw. die Energieabsorption durch den Aufreissstreifen 9 bestimmt wird.

Der Reissbügel 7 ist im Befestigungsbereich mit Vorteil beidseitig als Blechzunge ausgeführt, welche zwischen dem Chassis 18 und der Flanschförmigen Gleitfläche 8 der Konsole 6 liegt und durch die Verschraubung 17 ortsfest gegenüber dem Chassis 18 ebenfalls festgeklemmt wird. Im Aufprallfall verschiebt sich somit die Konsole 6 maximal entsprechend der Laufschlitzlänge 20 gemeinsam mit dem Keilschuh 14, welcher sich somit von dem stationären Gleitschuh 13 wegbewegt, wobei der Reissbügel 7 ebenfalls stationär verbleibt und der Aufreissstreifen 9, welche an einem Konsolenteil 6 fixiert ist, aufgerissen wird. Um eine spielfreie Verbindung zwischen Gleitschuh 13 und dem Reissbügel 7 herzustellen, wird die Bohrung im Reissbügel 7 mit Vorteil so mit einem Bördel 16 versehen, dass der Gleitschuh 13 mit dem Bördel 16 zusammengeführt wird, wie dies auch aus der Figur 2a ersichtlich ist. In der Aufsicht ist diese Anordnung in Figur 3b dargestellt, wo der Laufschlitz 20 ersichtlich ist.

Eine weitere Verbesserung der Reproduzierbarkeit des Losbrechverhaltens kann erreicht werden, indem die Klemmflächen 22, das heisst die geneigte Gleitschuhfläche 13 und die Keilschuhfläche 14 definiert oberflächenbehandelt wird. Dies kann beispielsweise dadurch erfolgen, dass die Oberflächen gezielt aufgerauht und/oder beschichtet werden und/oder auch geschmiert werden.

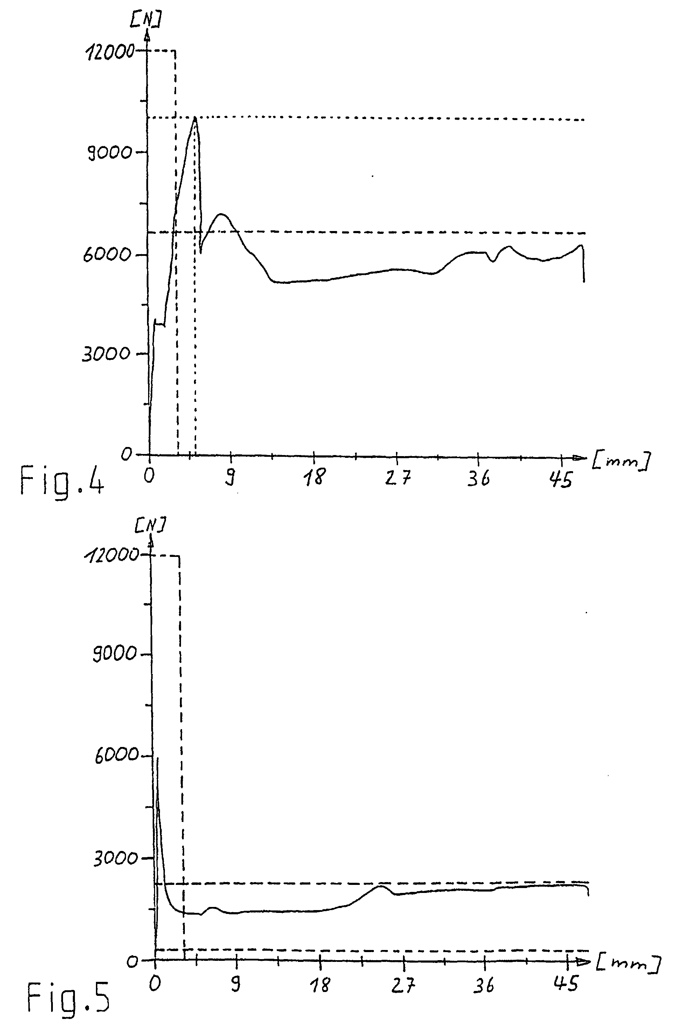

Das Anzugsmoment der Klemmschrauben wird mit Vorteil mit Drehmomentüberwachung im Bereich von 15 bis 35 Nm eingestellt. In Figur 4 ist in einem Losbrechdiagramm das gemessene Verhalten der Losbrechkraft über einen Weg von 45 mm dargestellt, wobei die Verschraubung mit einem Drehmoment von 25 Nm erfolgte. Daraus ist ersichtlich, dass die Losbrechkraft über 9000 N betrug und erst nach einem längeren Weg von etwa 5 mm abfällt, wobei aber eine relativ hohe Restklemmkraftwirkung von etwa 6000 N undefiniert verbleibt bis der Weg von 45 mm abgearbeitet worden ist. Unter denselben Messbedingungen wird in Figur 5 das erfindungsgemässe Verhalten gezeigt mit einer Anordnung gemäss Figur 1. Die Verschraubung wurde ebenfalls mit 25 Nm Drehmoment eingestellt. Die Losbrechkraft erreicht 6000 N und fällt steil und definiert nach etwa 1 mm Weg sofort ab, um nachher auf tiefem Niveau mit Losbrechelementen mit geneigten Flächen unter 2000 N gleichförmig über den ganzen Weg von 45 mm zu verbleiben. Bei der erfindungsgemässen Anordnung wird also nach dem kurzen Losbrechvorgang die Absorptionsenergie definiert, reproduzierbar und vorgebbar durch das Absorptionselement wie vorzugsweise eine Aufreisslasche bestimmt, beispielsweise mit Energieabsorptionskräften von 1200 bis 5500 N vorgegeben wird.

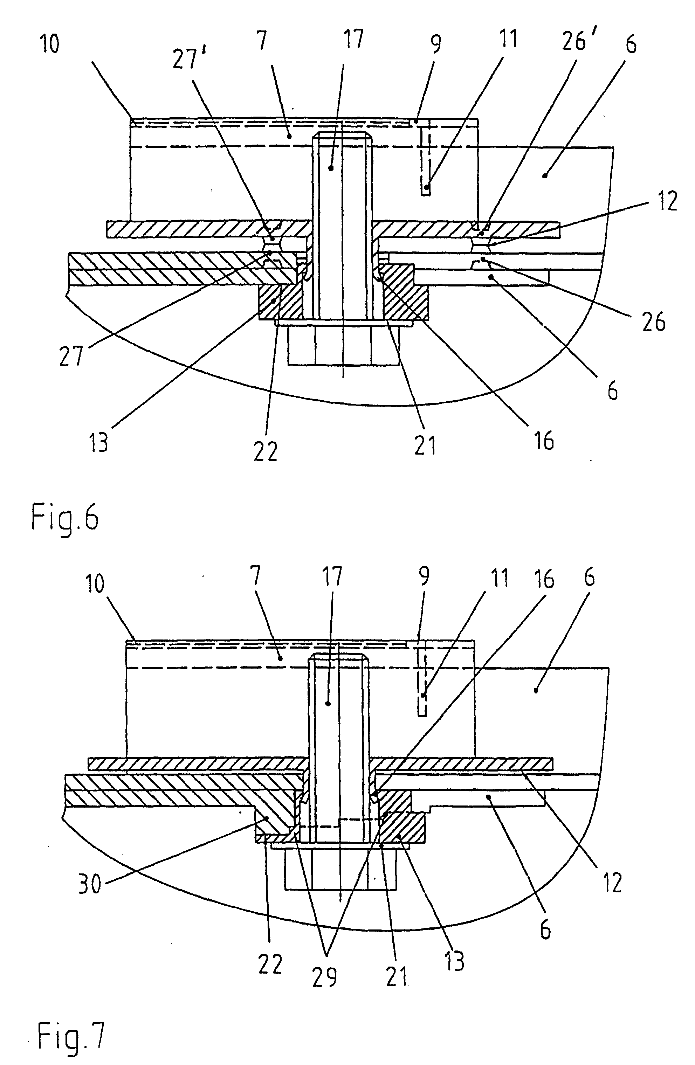

Eine weitere sehr geeignete Möglichkeit, ein Losbrechelement zu realisieren, wie in Figur 6 dargestellt, besteht darin, wenn beispielsweise zwischen den Gleitflächen 8, 12 Erhebungen 26, 27 angeordnet werden, um die Gleitflächen in der Ausgangsposition in einem geringen Abstand von einigen Zehnteln mm bis ca 3mm zu halten. Die Erhebungen 26, 27 sind beidseitig der Gleitflächen im Wesentlichen symmetrisch so anzuordnen, dass dort, wo die Erhebungen zusammengeklemmt aufeinander liegen, kurze Gleitflächen 12 entstehen, welche im Verschiebefall, das heisst im Crashfall, voneinander runtergleiten und so auf eine kurze Distanz im mm-Bereich die Klemmkraftwirkung aufheben, womit dann die Energieabsorption vom Absorptionselement 7, 9, 10, 11 definiert übernommen wird. Solche Erhebungen können beispielsweise noppenartig ausgebildet werden und beidseitig in Wellenachsenlängsrichtung der Schraubbefestigung 17 angeordnet werden. Es können aber auch mehrere noppenartige Erhebungen nebeneinander oder hintereinander und weiter abgetreppt oder auch auf einer schiefen Ebene liegend angeordnet werden, je nach Anforderung der Klemmkräfte, der Reibungskräfte und der Verschiebewege beziehungsweise der Dimensionierung der gesamten Anordnung. Im vorliegenden Fall wird der Gleitschuh 13 beispielsweise als einfache Beilagscheibe realisiert. Es ist aber auch möglich, diese noppenartigen Ausbildungen im Bereich des Gleitschuh 13 vorzusehen.

In Figur 7 ist eine weitere äusserst vorteilhafte und einfach zu realisierende Ausführung eines Losbrechelementes dargestellt. Bei dieser Ausführung werden die aneinaderliegenden, geklemmten Flächen des Gleitschuh 13 und des ursprünglichen Keilschuh 14 nicht keilförmig ausgeführt, sondern treppenartig ausgebildet. Die Stufenweite der treppenartigen Ausbildung definiert hierbei den Losbrechweg. Diese Ausführung ist besonders einfach und kostengünstig realisierbar. Die vorerwähnten verschiedenen Typen der Losbrechelemente können untereinander auch in kombinierter Form verwendet werden.

## Patentansprüche

1. Lenkvorrichtung für Kraftfahrzeuge mit einer Lenkwelle, die von einem Führungskasten (3) geführt ist, welcher mit einer Haltekonsole (6) verbunden ist, wobei die Konsole mindestens eine Gleitfläche (8) entlang der Wellenachse (1) aufweist, welche einen Verschiebeweg, (20) gegenüber dem Chassis (18) zulässt und dass beidseitig der Wellenachse 1 Klemmmittel (13, 16, 17) vorgesehen sind zur axialen Halterung der Konsole (6) in der Ausgangsposition des Verschiebeweges (20) und dass mit den Klemmmitteln (13, 16, 17) ein Reissbügel (7) mit Gleitfläche (12) von einem Konsolenflansch 8) gegen das Chassis (18) geklemmt wird, insbesondere ohne eine separate Konsolenführung, wobei die Konsole (6), der Führungskasten (3) und der Reissbügel (7) als Blechteil ausgebildet sind **dadurch gekennzeichnet, daß** der Reissbügel (7) in Wellenachsrichtung (1) einen Aufreissstreifen (9) aufweist der zwischen Kerbbahnen (10) ausgebildet ist, wobei der Aufreissstreifen am einen Ende eine Haltelasche (9) aufweist, die den Aufreissstreifen an der Konsole (6) fixiert und dass der Reissbügel (7) beidseitig der Wellenachse (1) mit den Klemmmitteln (13, 16, 17) geklemmt befestigt ist derart, dass des Reissbügel (7) mit Aufreissstreifen und Haltelasche (9) im wesentlichen mitlig zwischen den Klemmitteln (13, 16, 17) angeordnet ist.

2. Vorrichtung nach Anspruch 1 **dadurch gekennzeichnet, dass** die Klemmmittel (7, 17, 18, 21) eine Verschraubung (17) aufweisen, vorzugsweise je eine Verschraubung (17) beidseitig zur Wellenachse (1), vorzugsweise mit einem Anzugsmoment von 20 bis 30 Nm.

3. Vorrichtung nach einem der vorhergehenden Ansprüche **dadurch gekennzeichnet, dass** in mindestens einem Teilbereich der Ausgangsposition die Klemmmittel (13, 16, 17,) ein Losbrechelement (13, 14, 29, 30) mit einer Klemmfläche (22) enthalten, so dass bei einer Verschiebung der Konsole in Wellenachsenrichtung (19) die Klemmkraft verringert wird.

4. Vorrichtung nach Anspruch 3 **dadurch gekennzeichnet, dass** das Losbrechelement (13, 14, 29, 30) eine abgetreppte Klemmfläche (29, 22) aufweist, vorzugsweise mit mindestens 2 Stufen (29).

5. Vorrichtung nach Anspruch 3 **dadurch gekennzeichnet, dass** das Losbrechelement (13, 14, 29, 30) zwischen der Gleitfläche (8) und dem Chassis (18) paarweise in der Ausgangsposition übereinander liegende Erhebungen (26, 26', 27, 27') aufweist, so dass die konsolenseitige Erhebung (26, 27) im Verschiebefall von der chassisseitigen Erhebung (26', 27') heruntergleitet.

6. Vorrichtung nach Anspruch 5 **dadurch gekennzeichnet, dass** mindestens zwei Erhebungspaare (26, 26', 27, 27') vorgesehen sind und dass in Wellenachsenrichtung (1) das Klemmmittel (17) dazwischen liegt, wobei die Erhebungen (26, 26', 27, 27') vorzugsweise noppenartig ausgebildet sind, wobei vorzugsweise die zwischen den Erhebungen liegenden Flächen (12) geneigt, insbesondere auf einer geneigten Fläche liegend, ausgebildet sind.

7. Vorrichtung nach einem der vorhergehenden Ansprüche **dadurch gekennzeichnet, dass** die Konsole (6) über einen gegenüber dem Chassis (18) ortsfesten Energieabsorptionselement (9, 10) verbunden ist, vorzugsweise mit einem Aufreissstreifen (9, 10).

8. Vorrichtung nach einem der vorhergehenden Ansprüche **dadurch gekennzeichnet, dass** die Konsole (6) den Führungskasten (3) klemmt und beidseitig Gleitflächen (8) und Mittel (13, 16, 17) zur Klemmbefestigung am Chassis (18) aufweist, wobei diese Klemmbefestigung vorzugsweise geschraubt ist.

9. Vorrichtung nach einem der vorhergehenden Ansprüche **dadurch gekennzeichnet, dass** der Aufreissstreifen eine Gleitfläche (12) aufweist und diese vorzugsweise zwischen Chassis (18) und Konsolengleitfläche (6, 8) liegt.

10. Vorrichtung nach einem der vorhergehenden Ansprüche **dadurch gekennzeichnet, dass** die Klemmflächen (22) als ringförmige Scheiben ausgebildet sind, wobei die obere Scheibe (14) an der Konsole (6) fixiert ist und die untere Scheibe (13) als Gleitschuh (13) mit den Klemmmitteln ortsfest am Chassis (18) gehalten wird.

11. Vorrichtung nach einem der vorhergehenden **Ansprüche dadurch gekennzeichnet, dass** die Gleitfläche (8) in der Konsole (6) einen Laufschlitz (20) zur geführten Aufnahme von Klemmmittelteilen (16, 17, 13) aufweist.

12. Vorrichtung nach einem der vorhergehenden Ansprüche **dadurch gekennzeichnet, dass** mindestens eine der Klemmflächen (22) oberflächenbehandelt ist, wie beschichtet, aufgerauht oder geschmiert ist.

13. Vorrichtung nach einem der vorhergehenden Ansprüche **dadurch gekennzeichnet, dass** die Konsole (6) als Blechteil ausgeführt ist, vorzugsweise als Biege- oder Stanzteil, insbesondere als gefaltetes Blechteil.

14. Vorrichtung nach einem der vorhergehenden Ansprüche **dadurch gekennzeichnet, dass** das Energieabsorptionselement (9, 10) als Reissbügel (7) ausgebildet ist und vorzugsweise ortsfest direkt am Chassis (18) mit Klemmmitteln (17) fixiert ist und verbindend verstemmt ist.

15. Vorrichtung nach einem der vorhergenden Ansprüche **dadurch gekennzeichnet, dass** weitere Mittel (26, 27) im Bereich der Klemmmittel (13, 16, 17) vorgesehen sind, so dass die Konsole (6) gegenüber diesen und dem Chassis (18) federelastisch vorgespannt ist.

16. Vorrichtung nach einem der vorhergenden Ansprüche **dadurch gekennzeichnet, dass** beabstandet in Wellenachsenrichtung zur Verschraubung (17) zwischen der Konsolengleitfläche (8) und der gegenüberliegenden Fläche (7, 18) eine Erhebung (26, 27) als Distanzelement derart vorgesehen ist, dass im verschraubten Zustand zwischen den Klemmmitteln (7, 17, 18, 21) eine federelastische Verspannung auftritt.

17. Vorrichtung nach Anspruch 16 **dadurch gekennzeichnet, dass** Erhebungen (26, 27) in Wellenachsenrichtung (1) beidseitig zur Verschraubung (17) vorgesehen sind, vorzugsweise mindestens eine länglich und/oder je Seite mehrere.

18. Vorrichtung nach Anspruch 17 **dadurch gekennzeichnet, dass** die Erhebung als Erhöhung, beispielsweise als Noppe, (26, 27) ausgebildet ist, vorzugsweise in einem Reissbügel (7) und/oder in der Konsolengleitfläche (8) eingedrückt ist.

## Claims

1. Steering device for motor vehicles with a steering shaft guided by a guide box (3) which is connected with a mounting console (6), where the console has at least one slide surface (8) along the shaft axis (1) allowing a displacement path (20) in relation to the chassis (18), and that on both sides of the shaft axis (1) are provided clamping means (13, 16, 17) for axial mounting of the console (6) in the starting position of the displacement path (20), and that the clamping means (13, 16, 17) clamp a severance bracket (7) with slide surface (12) of a console flange (8) against the chassis (18), in particular without a separate console guide, where the console (6), guide box (3) and severance bracket (7) are formed as sheet metal components, **characterised in that** the severance bracket (7) in the shaft axial direction (1) has a tear strip (9) formed between notch strips (10), where the tear strip has at one end a retaining tab (9) fixing the tear strip to the console (6) and that the severance bracket (7) is fixed clamped on both sides of the shaft axis (1) with the clamping means (13, 16, 17) such that the severance bracket (7) with tear strips and retaining tab (9) is arranged essentially centrally between the clamping means (13, 16, 17).

2. Device according to claim 1, **characterised in that** the clamping means (7, 17, 18, 21) have a screw connection (17), preferably a screw connection (17) on both sides of the shaft axis (1), preferably with a tightening torque of 20 to 30 Nm.

3. Device according to any of the preceding claims, **characterised in that** in at least one part area of the starting position, the clamping means (13, 16, 17) contain a break-out element (13, 14, 29, 30) with a clamping surface (22) so that the clamping force is reduced on a shift of the console in the shaft axial direction (19).

4. Device according to claim 3, **characterised in that** the break-out element (13, 14, 29, 30) has a stepped clamping surface (29, 22) preferably with at least two steps (29).

5. Device according to claim 3, **characterised in that** the break-out element (13, 14, 29, 30) between the slide surface (8) and the chassis (18) has paired protrusions (26, 26', 27, 27') lying opposite each other in the starting position so that in the case of a shift, the protrusion on the chassis side (26', 27') slides below the protrusion on the console side (26,27).

6. Device according to claim 5, **characterised in that** at least two protrusion pairs (26, 26', 27, 27') are provided and that in the shaft axial direction (1) the clamping means (17) lie in-between, the protrusions (26, 26', 27, 27') preferably being formed knob-like, where preferably the surfaces (12) lying between the protrusions are inclined, in particular lying on an inclined surface.

7. Device according to any of the preceding claims, **characterised in that** the console (6) is connected via an energy absorption element (9, 10) fixed in location in relation to the chassis (18), preferably with a tear strip (9, 10).

8. Device according to any of the preceding claims, **characterised in that** the console (6) clamps the guide box (3) and on both sides has slide surfaces (8) and means (13, 16, 17) for clamp fixing (16) on the chassis (18), where this clamp fixing is preferably screwed.

9. Device according to any of the preceding claims, **characterised in that** the tear strip has a slide surface (12) and this preferably lies between the chassis (18) and the console slide surface (6, 8).

10. Device according to any of the preceding claims, **characterised in that** the clamping surfaces (22) are formed as ring-like discs where the upper disc (14) is fixed to the console (6) and the lower disc (13) as a slide shoe (13) is held by the clamping means in fixed location on the chassis (18).

11. Device according to any of the preceding claims, **characterised in that** the slide surface (8) in the console (6) has a running slot (20) for guided support of the clamping means parts (16, 17, 13).

12. Device according to any of the preceding claims, **characterised in that** at least one of the clamping surfaces (22) is surface-treated such as coated, roughened or lubricated.

13. Device according to any of the preceding claims, **characterised in that** the console (6) is designed as a sheet metal part, preferably as a folded or punched part, in particular as a folded sheet metal part.

14. Device according to any of the preceding claims, **characterised in that** the energy absorption element (9, 10) is formed as a severance bracket (7) and preferably fixed directly to the chassis (18) in fixed location by clamping means (17) and connected by mastic.

15. Device according to any of the preceding claims, **characterised in that** further means (26, 27) are provided in the area of the clamping means (13, 16, 17) so that the console (6) is pretensioned sprung elastically against these and the chassis (18).

16. Device according to any of the preceding claims, **characterised in that** spaced from the screw fitting (17) in the shaft axial direction between the console surface (8) and the opposing surface (7, 18) is provided a protrusion (26, 27) as a spacer element such that in the screwed state a sprung elastic tension occurs between the clamping means (7, 17, 18, 21).

17. Device according to claim 16, **characterised in that** protrusions (26, 27) are provided in the shaft axial direction (1) on both sides of the screw fitting (17) and preferably at least one as an oblong and/or several per side.

18. Device according to claim 17, **characterised in that** the protrusion is formed as a projection, preferably as a knob (26, 27), preferably pressed into a severance bracket and/or into the console slide surface (8).

## Revendications

1. Colonne de direction pour véhicules automobiles qui comporte un arbre de direction qui est guidé par un caisson de guidage (3) relié à une console de maintien (6), dans laquelle la console présente le long de l'axe (1) de l'arbre au moins une surface de glissement (8) qui permet un trajet de coulissement (20) par rapport au châssis (18), dans laquelle des moyens de serrage (13, 16, 17) sont prévus des deux côtés de l'axe (1) de l'arbre pour tenir axialement la console (6) dans la position initiale du trajet de coulissement (20) et dans laquelle un étrier de déchirage (7) est serré par une surface de glissement (12) contre le châssis (18) avec les moyens de serrage (13, 16, 17) par une bride (8) de console, en particulier sans aucun guidage séparé de console, et dans laquelle la console (6), le caisson de guidage (3) et l'étrier de déchirage (7) sont réalisés en tôle, **caractérisée en ce que** l'étrier de déchirage (7) comporte dans la direction de l'axe (1) de l'arbre une bande de déchirage (9) qui est formée entre des voies (10) en forme de rainures, la bande de déchirage comportant à une extrémité une languette de maintien (9) qui fixe la bande de déchirage à la console (6), et **en ce que** l'étrier de déchirage (7) est fixé par serrage des deux côtés de l'axe (1) de l'arbre avec les moyens de serrage (13,16, 17) d'une manière telle que l'étrier de déchirage (7), à bande de déchirage et languette de maintien (9), est agencé sensiblement au milieu entre les moyens de serrage (13, 16, 17).

2. Dispositif selon la revendication 1, **caractérisé en ce que** les moyens de serrage (7, 17, 18, 21) comportent un élément d'assemblage (17) par vissage, de préférence un élément d'assemblage (17) par vissage de chaque côté de l'axe (1) de l'arbre de direction, de préférence à couple de serrage de 20 à 30 Nm.

3. Dispositif selon la revendication 1 ou 2, **caractérisé en ce que** les moyens de serrage (13, 16, 17) comportent, dans au moins une zone partielle de la position initiale, un élément de détachement par rupture (13, 14, 29, 30) à surface de serrage (22) de sorte que la force de serrage est réduite lors d'un coulissement de la console dans la direction (19) de l'axe de l'arbre.

4. Dispositif selon la revendication 3, **caractérisé en ce que** l'élément de détachement par rupture (13, 14, 29, 30) comporte une surface de serrage (29, 22) à gradins, de préférence à deux gradins (29) au moins.

5. Dispositif selon la revendication 3, **caractérisé en ce que** l'élément de détachement par rupture (13, 14, 29, 30) comporte, entre la surface de glissement (8) et le châssis (18), des bosses (26, 26', 27, 27') superposées par paires dans la position initiale, d'une manière telle que la bosse (26, 27) côté console glisse vers le bas en cas de déplacement de la bosse (26', 27') côté châssis.

6. Dispositif selon la revendication 5, **caractérisé en ce qu'**il comprend au moins deux paires (26, 26', 27, 27') de bosses et **en ce que** le moyen de serrage (17) est disposé entre elles dans la direction de l'axe (1) de l'arbre, les bosses (26, 26', 27, 27') étant de préférence en forme de boutons, la configuration des surfaces (12) situées entre les bosses étant de préférence inclinée, en particulier reposant sur une surface inclinée.

7. Dispositif selon l'une quelconque des revendications précédentes, **caractérisé en ce que** la console (6) est attachée au moyen d'un élément d'absorption (9, 10), de préférence une bande de déchirage (9, 10), fixe par rapport au châssis (18).

8. Dispositif selon l'une quelconque des revendications précédentes, **caractérisé en ce que** la console (6) serre le caisson de guidage (3) et comporte, des deux côtés, des surfaces de glissement (8) et des moyens (13, 16, 17) de fixation par serrage sur le châssis (18), cette fixation par serrage étant de préférence un assemblage par vissage.

9. Dispositif selon l'une quelconque des revendications précédentes, **caractérisé en ce que** la bande de déchirage comporte une surface de glissement (12) et que celle-ci est de préférence située entre le châssis (18) et la surface de glissement (6, 8) de la console.

10. Dispositif selon l'une quelconque des revendications précédentes, **caractérisé en ce que** les surfaces de serrage (22) consistent en des disques annulaires, le disque supérieur (14) étant fixé à la console (6) et le disque inférieur (13) étant tenu de façon fixe sur le châssis (18) avec les moyens de serrage en tant que patin de glissement (13).

11. Dispositif selon l'une quelconque des revendications précédentes, **caractérisé en ce que** la surface de glissement (8) dans la console (6) comporte une fente de glissement (20) pour recevoir en les guidant des éléments (16, 17, 13) des moyens de serrage.

12. Dispositif selon l'une quelconque des revendications précédentes, **caractérisé en ce qu'**au moins l'une des surfaces de serrage (22) est traitée superficiellement, par exemple revêtue, rendue rugueuse ou lubrifiée.

13. Dispositif selon l'une quelconque des revendications précédentes, **caractérisé en ce que** la console (6) est réalisée en tôle, de préférence formée par pliage ou emboutissage, en particulier par un élément de tôle pressée.

14. Dispositif selon l'une quelconque des revendications précédentes, **caractérisé en ce que** l'élément d'absorption (9, 10) d'énergie consiste en un étrier de déchirage (7) et est de préférence tenue de manière fixe sur le châssis (18) par des éléments de serrage (17), et est retenu par matage.

15. Dispositif selon l'une quelconque des revendications précédentes, **caractérisé en ce que** des moyens additionnels (26, 27) sont prévus au voisinage des moyens de serrage (13, 16, 17) de manière telle que la console (6) est précontrainte élastiquement par rapport à ceux-ci et par rapport au châssis (18).

16. Dispositif selon l'une quelconque des revendications précédentes, **caractérisé en ce qu'**une bosse (26, 27) servant d'entretoise est prévue dans la direction de l'axe (1) de l'arbre pour l'assemblage par vissage (17) entre la surface de glissement (8) de console et la surface opposée (7, 18) d'une manière telle qu'une contrainte élastique est établie dans l'état vissé entre les moyens de serrage (7, 17, 18, 21).

17. Dispositif selon la revendication 16, **caractérisé en ce que** des bosses (26, 27) sont prévues des deux côtés dans la direction de l'axe (1) de l'arbre pour le vissage (17), de préférence au moins une bosse dans le sens longitudinal et/ou plusieurs de chaque côté.

18. Dispositif selon la revendication 17, **caractérisé en ce que** la bosse consiste en une surélévation, par exemple un bouton (26, 27), de préférence poinçonné dans un étrier de déchirage (7) et/ou dans la surface de glissement (8) de console.
